# EUROPÄISCHE PATENTSCHRIFT

(11) **EP 1 793 714 B1**
(45) Veröffentlichungstag und Bekanntmachung des Hinweises auf die Patenterteilung: **06.05.2009**
(21) Anmeldenummer: 05786947.1
(22) Anmeldetag: 29.08.2005
(51) Int. Cl.: A47J 31/44

(54) **KAFFEEMASCHINE MIT FLÄCHIGEM ABLAGEELEMENT**
COFFEE MACHINE WITH A PLANAR STORAGE ELEMENT
MACHINE A CAFE POURVUE D'UN ELEMENT DE RECEPTION PLAN

(30) Priorität: 24.09.2004 DE 102004046434
(43) Veröffentlichungstag der Anmeldung: 13.06.2007
(73) Patentinhaber: BSH Bosch und Siemens Hausgeräte GmbH, 81739 München (DE)
(72) Erfinder: MAGG, Johannes, 83368 St. Georgen (DE); SCHÖNFELDER, Thomas, 83250 Marquartstein (DE); STEFFL, Michael, 83250 Marquartstein (DE)
(74) Vertreter: Dosterschill, Peter
(86) Internationale Anmeldenummer: PCT/EP2005/054235
(87) Internationale Veröffentlichungsnummer: WO 2006/032596

(56) Entgegenhaltungen:
- DE-A1- 3 137 688
- DE-A1- 3 741 922
- DE-A1- 3 843 702
- DE-U1- 20 100 865
- FR-A- 2 214 069

## Beschreibung

Die Erfindung betrifft eine Kaffeemaschine gemäß dem Oberbegriff von Anspruch 1.

Kaffeemaschinen des Standes der Technik arbeiten nach unterschiedlichen Prinzipien. Die gängigsten Modelle sind die sogenannten drucklos arbeitenden Kaffeemaschinen. Bei diesen fließt Wasser aus einem Vorratsbehälter in ein elektrisch beheizbares Rohr. Insbesondere durch Dampfentwicklung in diesem Rohr wird erwärmtes Wasser dann durch eine Steigleitung zu einem Auslauf gedrückt, über welchen das erwärmte Wasser dann in einen Kaffeefilter tropft. Aus diesem Kaffeefilter kann der filterkaffee bei atmosphärischem Druck dann in eine Kanne fließen.

Im Gegensatz hierzu liegt bei Espressomaschinen ein erhöhter Druck im Bereich des Kaffeemehls vor, beispielsweise 15 bar. Dies wird erreicht, indem Wasser aus einem Wasserbehälter oder einer sonstigen Wasserzuführung einer elektromotorisch angetriebenen Pumpe zugeführt wird, die das Wasser dann unter hohem Druck über einen elektrisch beheizbaren Bereich einer Kaffeemehlaufnahmeeinrichtung zuführt. Diese Kaffeemehlaufnahmeeinrichtung umfasst im Allgemeinen ein Sieb zur Aufnahme des Kaffees. Zur Erzeugung des hohen Drucks im Bereich des Kaffees ist die Kaffeemehlaufnahmeeinrichtung während des Betriebs in einem gegen die Atmosphäre abgedichteten Bereich angeordnet, der als Druckraum oder Brühkammer bezeichnet werden kann.

Eine solche Espressomachine wird von DE 3843702 A beschrieben.

Bei einer weiteren prinzipiell anders arbeitenden Kaffeemaschine ist vorgesehen, das Wasser zur Zubereitung des Kaffees zunächst aus einem Wasserbehälter in einen beheizbaren Zwischenbehälter zu überführen. Von diesem Zwischenbehälter gelangt das erwärmte Wasser zu einer elektromotorisch angetriebenen Pumpe, von der es unter erhöhtem Druck, beispielsweise 2 bis 3 bar, einer Kaffeemehlaufnahmeeinrichtung zugeführt wird. Dabei ist vorgesehen, dass der Kaffee, anders als bei der Espressomaschine, nicht in loser Form als Kaffeemehl in die Kaffeemehlaufnahmeeinrichtung eingebracht wird, sondern in Form eines Kaffeepads, das heißt in verdichteter Form mit Filterpapier umgeben, in einen Halter eingelegt wird. Der Halter kann mit einer Halterabdeckung, über die Wasser zugeführt wird, einen abgedichteten Druckraum bilden. Dem Halter für die Kaffeepads kommen dabei mehrere Funktionen zu. Zum einen stellt der Halter eine Dichtfläche bereit, so dass eine Druckkammer gebildet werden kann. Weiterhin hat der Halter eine Auslassöffnung, aus der der Kaffee austreten kann. Ferner soll der Kaffeepad in einer Weise in dem Halter gelagert sein, so dass das Durchströmen des Kaffeepads nicht behindert wird. Eine derartige Kaffeemaschine nimmt eine Zwischenstellung zwischen einer herkömmlichen drucklosen Kaffeemaschine und einer Espressomaschine ein.

In Kaffeemaschinen können Vibrationen auftreten, insbesondere aufgrund des Betriebs einer Pumpe. Diese führen zu einer unerwünschten Geräuschentwicklung, beispielsweise im Bereich eines von der Kaffeemaschine abnehmbaren Bleches, auf welches die Tassen zum Zwecke der Kaffeeentnahme aufgestellt werden. Es kann sowohl zu einer Geräuschentwicklung im Auflagebereich des Bleches kommen; ebenso kann ein "Klappern" der Tassen auf dem Blech auftreten. Aufgrund der Vibrationen ist es weiterhin möglich, dass die Tassen auf dem Blech "wandern". Dies kann unter ungünstigen Umständen dazu führen, dass ein Teil des zu entnehmenden Kaffees an der Tasse vorbeiläuft.

Aufgabe der Erfindung ist es, eine Kaffeemaschine zur Verfügung zu stellen, so dass eine Geräuschentwicklung und sonstige mit Vibrationen im Zusammenhang stehende unerwünschte Effekte vermieden werden.

Diese Aufgabe wird mit den Merkmalen des unabhängigen Anspruchs gelöst.

Vorteilhafte Ausführungsformen der Erfindung sind in den abhängigen Ansprüchen angegeben.

Die Erfindung baut auf der gattungsgemäßen Kaffeemaschine dadurch auf, dass zwischen dem Ablageelement und dem Gehäuse elastische Dämpfungsmittel vorgesehen sind. Dadurch wird der Kontakt zwischen dem Ablageelement und dem Gehäuse durch elastische Mittel zur Verfügung gestellt. Durch die elastischen Mittel wird eine Geräuschentwicklung zwischen dem flächigen Ablageelement, das heißt insbesondere dem Ablageblech, und dem Gehäuse reduziert. Ebenfalls wird weniger Vibrationsenergie von dem Gehäuse auf das Ablageblech übertragen, so dass letztlich auch eine geringere Vibration im Bereich von auf das Auflageblech aufgestellten Tassen auftritt.

Nützlicherweise ist vorgesehen, dass die elastischen Mittel mit dem Gehäuse fest verbundene Unterleger umfassen. Dies ist eine einfache und dennoch wirkungsvolle Maßnahme zur Bereitstellung des elastisch gedämpften Kontaktes zwischen dem flächigen Ablageelement und dem Gehäuse.

In diesem Zusammenhang ist es nützlich, dass das Gehäuse im Wesentlichen aus Kunststoff besteht und dass die Unterleger in den Kunststoff eingebettet sind. Die Unterleger sind auf diese Weise sicher mit dem Gehäuse verbunden. Weiterhin können die Unterleger eine Stärke aufweisen, die größer ist als die über das Gehäuse überstehende Stärke der Unterleger. Aufgrund der so zur Verfügung gestellten ausreichenden Stärke der Unterleger wird die Schwingungsdämpfung verbessert; aufgrund der nur geringfügig überstehenden Unterleger sind diese beim Gebrauch der Kaffeemaschine, insbesondere bei der Reinigung der Kaffeemaschine, nicht störend. Mitunter reicht ein Überstand der Unterleger im Bereich von Bruchteilen eines Millimeters aus.

Nützlicherweise ist vorgesehen, dass die Unterleger aus Polyurethanschaum bestehen. Als Polyurethan-Elastomer hat beispielsweise der Wertstoff Sylomer günstige Eigenschaften im Hinblick auf die erfindungsgemäße Dämpfung.

In einer besonders bevorzugten Ausführungsform der vorliegenden Erfindung ist vorgesehen, dass drei Unterleger vorgesehen sind. Durch drei Unterleger wird eine Auflageebene für das Ablageblech genau definiert. Drei Unterleger sind daher in vielen Fällen ausreichend. Außerdem kann kein "Wippen" des Ablagebleches aufgrund von nicht exakt in einer Ebene liegenden Unterlegern auftreten.

Gemäß einer bevorzugten Ausführungsform der vorliegenden Erfindung ist vorgesehen, dass das Ablageelement zumindest teilweise mit einer elastischen Komponente beschichtet ist. Eine solche Beschichtung kann zusätzlich oder alternativ zu den Unterlegern vorliegen und ebenfalls eine schwingungsdämpfende Charakteristik der elastischen Mittel zur Verfügung stellen.

Dabei kann vorgesehen sein, dass das Ablageelement an seiner dem Gehäuse zugewandten Unterseite zumindest teilweise mit einer elastischen Komponente versehen bzw. beschichtet ist. Die elastische Komponente am Ablageelement wirkt somit als Vibrationsdämpfung zwischen Gehäuse und Ablageelement, das heißt in vergleichbarer Weise, wie die zwischen Gehäuse und Ablageelement angeordneten Unterleger.

Es kann aber auch nützlich sein, dass das Ablageelement an seiner von dem Gehäuse abgewandten Oberseite zumindest teilweise mit einer elastischen Komponente beschichtet oder umspritzt ist. Hierdurch werden insbesondere Vibrationen der Tassen oder der sonstigen Behälter auf dem Ablageblech verringert. In diesem Zusammenhang ist zu erwähnen, dass es von besonderem Vorteil sein kann, das Ablageelement von beiden Seiten gleich oder ähnlich zu gestalten, damit bei der Verwendung der Kaffeemaschine nicht darauf geachtet werden muss, das Ablageelement richtig herum auf das Gehäuse aufzulegen.

Der Erfindung liegt die Erkenntnis zugrunde, dass unerwünschte Geräusche und Vibrationen verringert werden können, indem einfache Maßnahmen zur Vibrationsdämpfung zwischen Ablageelement und Gehäuse ergriffen werden, wobei diese noch dadurch unterstützt werden können, dass das Ablageelement im Aufstellbereich der Tassen weitere schwingungsdämpfende Komponenten aufweist; diese können beispielsweise durch bekannte Zwei-Komponenten-Techniken (2K-Techniken) aufgebracht werden.

Die Erfindung wird nun mit Bezug auf die begleitenden Zeichnungen anhand besonders bevorzugter Ausführungsformen beispielhaft erläutert. Dabei zeigt:
- Figur 1: eine perspektivische Darstellung einer erfindungsgemäßen Kaffeemaschine;
- Figur 2: eine Schnittdarstellung einer erfindungsgemäßen Kaffeemaschine;
- Figur 3: eine teilweise geschnittene perspektivische Darstellung eines Teils einer erfindungsgemäßen Kaffeemaschine und
- Figur 4: eine andere teilweise geschnittene perspektivische Darstellung eines Teils einer erfindungsgemäßen Kaffeemaschine.

Bei der nachfolgenden Beschreibung der Zeichnungen bezeichnen gleiche Bezugszeichen gleiche oder vergleichbare Komponenten.

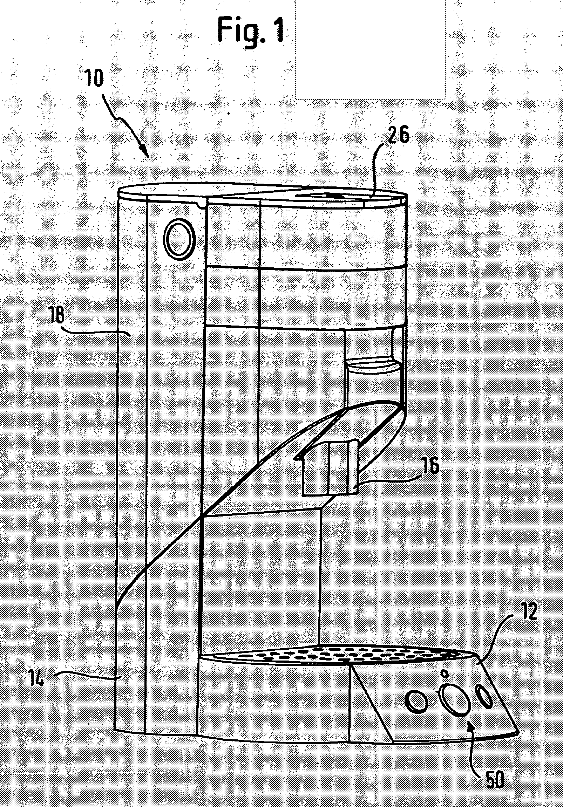

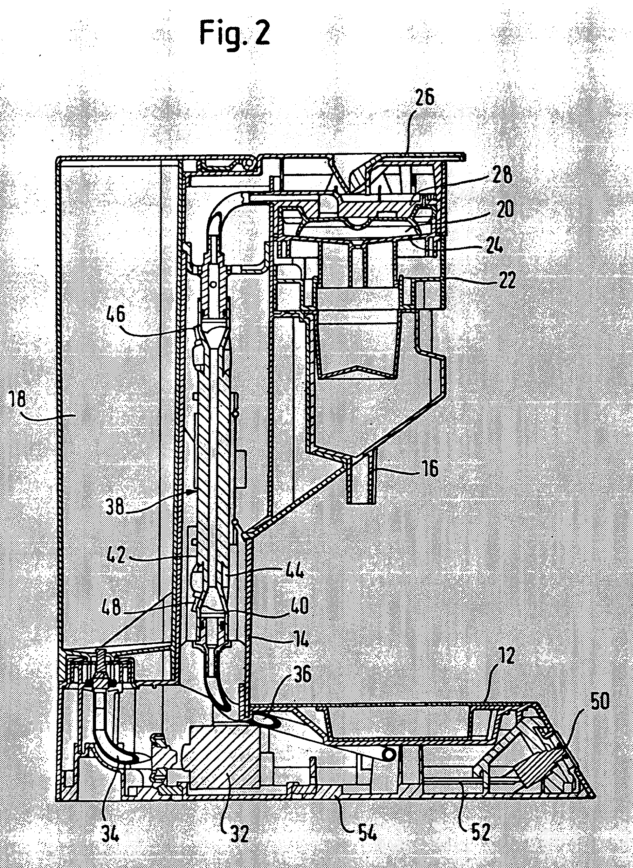

Figur 1 zeigt eine perspektivische Darstellung einer erfindungsgemäßen Kaffeemaschine. Figur 2 zeigt eine Schnittdarstellung einer erfindungsgemäßen Kaffeemaschine. Die Kaffeemaschine 10 umfasst ein flaches Vorderteil 12 und eine säulenartige hintere Baugruppe 14. Auf dem Vorderteil 12 können Tassen zur Entnahme von Kaffee über einen Auslauf 16 angeordnet werden. In die hintere Baugruppe 14 ist ein Wasserbehälter 18 eingesetzt. Die hintere Baugruppe 14 umfasst weiterhin eine Brühkammer 20, die durch einen mit einer Schublade zuführbaren Kaffeepadhalter 24 und eine elastische Halterabdeckung 28 gebildet wird. Um den Kaffeepadhalter 24 und die Halterabdeckung 28 nach dem Einschieben der Schublade 22 gegeneinander abzudichten, ist ein Hebelmechanismus mit einem Hebel 26 vorgesehen. Im dargestellten Zustand zieht der Hebelmechanismus den Kaffeepadhalter 24 gegen die Halterabdeckung 28. Legt man den Hebel 26 um 90° nach hinten um, so wird der Kaffeepadhalter 24 abgesenkt, so dass er zusammen mit der Schublade 22 aus der Kaffeemaschine 10 entnehmbar ist.

Innerhalb des durch das Vorderteil 12 und die hintere Baugruppe 14 gebildeten Gehäuses sind Komponenten zur Förderung von Wasser, zur Erwärmung von Wasser und zur Steuerung dieser Vorgänge vorgesehen. Im unteren Gehäusebereich an der Grenze zwischen dem Vorderteil 12 und der hinteren Baugruppe 14 ist eine Pumpe 32 angeordnet, der über einen Schlauch 34 Wasser aus dem Wasserbehälter 18 zugeführt wird. Über einen weiteren Schlauch 36 ist die Pumpe 32 mit einem Durchlauferhitzer 38 verbunden. Wesentliche Komponenten dieses Durchlauferhitzers 38 sind ein der Wasserführung dienendes Rohr 40 sowie zwei Heizstäbe 42, 44. Diese Heizstäbe 42, 44 weisen jeweils zwei elektrische Anschlüsse 46, 48 auf, an die die Heizspannung angelegt wird. Am Vorderteil 12 der Kaffeemaschine 10 ist ein Tastenfeld 50 vorgesehen, das mit einer Elektronikplatine 52 verbunden ist, wobei die Elektronikplatine 52 vorzugsweise sämtliche Funktionen der Kaffeemaschine steuert, insbesondere die Funktionen im Hinblick auf die Förderung und die Erwärmung des Wassers. Das vordere Gehäuseteil 12 und das hintere Gehäuseteil 14 werden von einer gemeinsamen Bodenplatte 54 nach unten abgeschlossen.

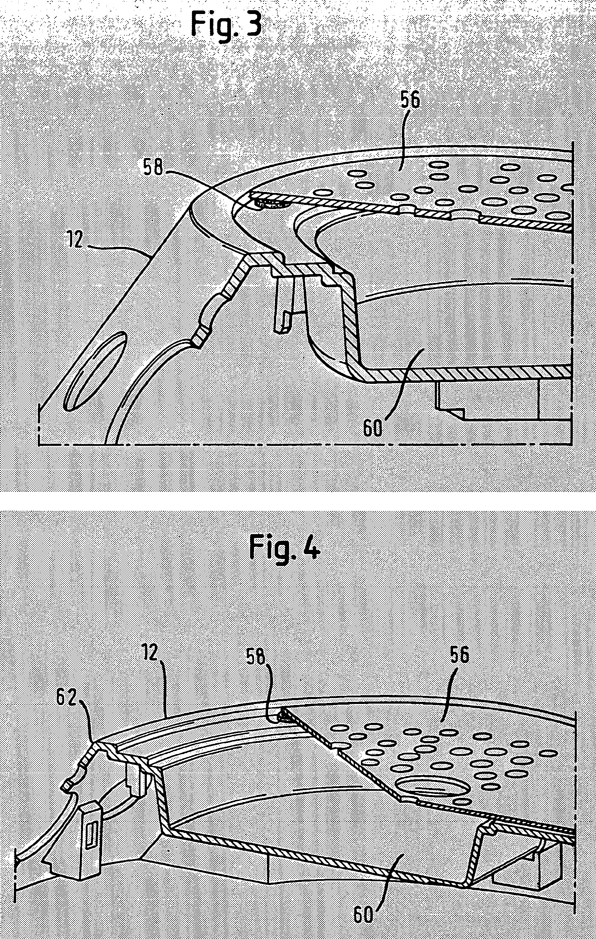

Die Figuren 3 und 4 zeigen teilweise geschnittene unterschiedliche perspektivische Darstellungen von Teilen einer Kaffeemaschine. Auf dem dargestellten Gehäusevorderteil 12 liegt ein flächiges Ablageelement 56 auf. Dieses flächige Ablageelement 56 weist Löcher auf, damit Flüssigkeit durch das Ablageelement 56 hindurchtreten kann. Diese Flüssigkeit wird dann unterhalb des Ablageelements in einer dafür vorgesehenen Sammelschale 60 gesammelt. Die Auflagefläche des Ablageelementes 56 ist durch einen umlaufenden Kragen 62 am Gehäusevorderteil 12 definiert. Das Ablageelement 56 liegt jedoch nicht direkt auf dem Gehäusevorderteil 12 auf, sondern auf Unterlegern 58 die innerhalb des Kragens 62 fest mit dem Gehäuse 12 verbunden sind. Vorzugsweise sind die Unterleger 58 in das Gehäuse 12 eingebettet, und sie stehen vorzugsweise nur geringfügig nach oben über; aufgrund des geringen Überstands wird die Reinigung der Kaffeemaschine in diesem Bereich nicht behindert. Zusätzlich oder alternativ zu den Unterlegern 58 kann das Ablageelement 56 auch mit elastischen Komponenten ganz oder teilweise beschichtet sein. Diese Beschichtung kann sowohl auf der Unterseite als auch auf der Oberseite des Ablageelementes 56 vorhanden sein. Auf der Unterseite werden Vibrationen zwischen Gehäuse und Ablageelement 56 gedämpft. Auf der Oberseite werden Vibrationen zwischen aufgestellten Tassen und dem Ablageelement 56 gedämpft.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Kaffeemaschine
- 12: Vorderteil
- 14: hintere Baugruppe
- 16: Auslauf
- 18: Wasserbehälter
- 20: Brühkammer
- 22: Schublade
- 24: Kaffeepadhalter
- 26: Hebel
- 28: Halterabdeckung
- 30: Brühkammeroberteil
- 32: Pumpe
- 34: Schlauch
- 36: Schlauch
- 38: Durchlauferhitzer
- 40: Rohr
- 42: Heizstab
- 44: Heizstab
- 46: elektrischer Anschluss
- 48: elektrischer Anschluss
- 50: Tastenfeld
- 52: Elektronikplatine
- 54: Bodenplatte
- 56: Ablageelement
- 58: Unterleger
- 58: elastische Mittel
- 60: Sammelschale
- 62: Kragen

## Patentansprüche

1. Kaffeemaschine mit einem Gehäuse (12) und einem auf das Gehäuse auflegbaren, vorzugsweise flächigen Ablageelement (56), auf das Gefäße, insbesondere Tassen, zum Einfüllen von Kaffee aus der Kaffeemaschine (10) aufgestellt werden können, **dadurch gekennzeichnet, dass** zwischen dem Ablageelement und dem Gehäuse elastische Dämpfungsmittel (58) vorgesehen sind.

2. Kaffeemaschine nach Anspruch 1, **dadurch gekennzeichnet, dass** die elastischen Dämpfungsmittel mit dem Gehäuse (12) fest verbundene Unterleger (58) umfassen.

3. Kaffeemaschine nach Anspruch 2, **dadurch gekennzeichnet, dass** das Gehäuse (12) im Wesentlichen aus Kunststoff besteht und dass die Unterleger (58) in den Kunststoff eingebettet sind.

4. Kaffeemaschine nach Anspruch 2 oder 3, **dadurch gekennzeichnet, dass** die Unterleger (58) aus Polyurethanschaum bestehen.

5. Kaffeemaschine nach einem der Ansprüchen 2 bis 4, **dadurch gekennzeichnet, dass** drei Unterleger (58) vorgesehen sind.

6. Kaffeemaschine nach einem der vorangehenden Ansprüche, **dadurch gekennzeichnet, dass** das Ablageelement (56) zumindest teilweise mit einer elastischen Komponente versehen ist.

7. Kaffeemaschine nach einem der vorangehenden Ansprüche, **dadurch gekennzeichnet, dass** das Ablageelement (56) mindestens an seiner dem Gehäuse (12) zugewandten Unterseite zumindest teilweise mit einer elastischen Komponente beschichtet oder umspritzt ist.

8. Kaffeemaschine nach einem der vorangehenden Ansprüche, **dadurch gekennzeichnet, dass** das Ablageelement (56) an seiner von dem Gehäuse (12) abgewandten Oberseite zumindest teilweise mit einer elastischen Komponente beschichtet oder umspritzt ist.

## Claims

1. Coffee machine with a housing (12) and a deposit element (56), which can be placed on the housing and is preferably flat and on which vessels, particularly cups, for filling with coffee from the coffee machine (10) can be placed, **characterised in that** resilient damping means (58) are provided between the deposit element and the housing.

2. Coffee machine according to claim 1, **characterised in that** the resilient damping means comprise washers (58) fixedly connected with the housing (12).

3. Coffee machine according to claim 2, **characterised in that** the housing (12) substantially consists of plastics material and that the washers (58) are embedded in the plastics material.

4. Coffee machine according to claim 2 or 3, **characterised in that** the washers (58) consist of polyurethane foam.

5. Coffee machine according to any one of claims 2 to 4, **characterised in that** three washers (58) are provided.

6. Coffee machine according to any one of the preceding claims, **characterised in that** the deposit element (56) is provided at least partly with a resilient component.

7. Coffee machine according to any one of the preceding claims, **characterised in that** the deposit element (56) is at least partly coated with or moulded around by a resilient component at least at its lower side facing the housing (12).

8. Coffee machine according to any one of the preceding claims, **characterised in that** the deposit element (56) is at least partly coated with or moulded around by a resilient component at least at its upper side remote from the housing (12).

## Revendications

1. Machine à café comprenant un boîtier (12) et un élément de réception (56), de préférence plan, pouvant être posé sur le boîtier, sur lequel élément des récipients, notamment des tasses, peuvent être posés pour le remplissage de café provenant de la machine à café (10), **caractérisée en ce que** des moyens d'amortissement élastiques (58) sont ménagés entre l'élément de réception et le boîtier.

2. Machine à café selon la revendication 1, **caractérisée en ce que** les moyens d'amortissement élastiques comprennent des éléments d'appui (58) raccordées de manière fixe au boîtier (12).

3. Machine à café selon la revendication 2, **caractérisée en ce que** le boîtier (12) est essentiellement constitué de matière plastique et **en ce que** les éléments d'appui (58) sont logées dans la matière plastique.

4. Machine à café selon la revendication 2 ou 3, **caractérisée en ce que** les éléments d'appui (58) sont constituées de mousse de polyuréthanne.

5. Machine à café selon l'une quelconque des revendications 2 à 4, **caractérisée en ce que** trois éléments d'appui (58) sont ménagées.

6. Machine à café selon l'une quelconque des revendications précédentes, **caractérisée en ce que** l'élément de réception (56) est muni au moins en partie d'un composant élastique.

7. Machine à café selon l'une quelconque des revendications précédentes, **caractérisée en ce que** l'élément de réception (56), au moins sur son côté inférieur tourné vers le boîtier (12), est recouvert ou enrobé au moins en partie par un composant élastique.

8. Machine à café selon l'une quelconque des revendications précédentes, **caractérisée en ce que** l'élément de réception (56), sur son côté supérieur détourné du boîtier (12), est recouvert ou enrobé au moins en partie par un composant élastique.
